Europäisches Patentamt

European Patent Office

Office européen des brevets

(11) Numéro de publication: **0 300 858**
**A1**

# (12) DEMANDE DE BREVET EUROPEEN

(21) Numéro de dépôt: **88401633.8**

(22) Date de dépôt: **27.06.88**

(51) Int. Cl.⁴: **F 16 H 7/12**
**F 16 F 9/10**

(30) Priorité: **02.07.87 FR 8709372**

(43) Date de publication de la demande:
**25.01.89 Bulletin 89/04**

(84) Etats contractants désignés:
**BE DE ES GB IT LU NL SE**

(71) Demandeur: **HUTCHINSON**
**2 rue Balzac**
**F-75008 Paris (FR)**

(72) Inventeur: **Zermati, Charles**
**15, rue d'Aven**
**F-78310 Maurepas (FR)**

(74) Mandataire: **Orès, Bernard et al**
**Cabinet ORES 6, Avenue de Messine**
**F-75008 Paris (FR)**

(54) Dispositif de tendeur rotatif pour courroie de transmission de puissance.

(57) Dispositif de tendeur rotatif pour courroie (15) de transmission de puissance comprenant un levier (17) portant un galet tendeur (19) coopérant avec la courroie (15) et un organe (33) exerçant un couple de rappel élastique.

Il comporte au moins un organe souple de forme générale toroïdale (21) rempli de fluide, séparé en deux chambres de volume variable par un organe presseur (26) à une des extrémités desdites chambres et par un clapet (25) à fonctionnement dissymétrique à l'autre extrémité desdites chambres, l'organe presseur (26) étant lié angulairement au levier (17) qui supporte le galet tendeur (19), et l'organe exerçant le couple de rappel élastique étant un ressort hélicoïdal accroché sur un bras (28) portant l'organe presseur.

FIG.2

FIG.3

EP 0 300 858 A1

## Description

### "DISPOSITIF DE TENDEUR ROTATIF POUR COURROIE DE TRANSMISSION DE PUISSANCE"

L'invention a pour objet un dispositif de tendeur rotatif pour courroie de transmission de puissance.

On sait que le bon fonctionnement d'un système cinématique à courroie de transmission de puissance exige d'associer à la courroie un dispositif tendeur lequel est destiné à maintenir aussi constante que possible la tension dans la courroie et cela indépendamment, - pour un système donné -, des variations de longueur dues aux tolérances de fabrication d'une même courroie, des variations de tension d'origine thermique et/ou mécanique, de la variation de la tension due à l'usure de la courroie, etc...

On a déjà proposé, pour ce faire, des tendeurs dits "linéaires", c'est-a-dire des dispositifs dans lesquels l'effort de rappel élastique, - auquel est avantageusement superposé un effort d'amortissement visqueux de type dissymétrique -, est appliqué suivant un axe en étant associé à un levier et à un galet sur lequel passe la courroie de transmission de puissance. Le levier qui supporte le galet est nécessairement fixé à un axe de rotation et, si un tel dispositif donne satisfaction en de nombreuses utilisations, il peut cependant parfois être inapproprié pour des systèmes cinématiques dans lesquels, pour des raisons d'encombrement ou autres, il importe que le levier portant le galet puisse être lui-même soumis à un couple de rappel élastique.

De tels dispositifs que l'on peut qualifier de "rotatifs", par opposition aux systèmes dits "linéaires", sont connus, par exemple, par DE-A-2 419 969, par EP-AI-0 013 704 ou par WO-A-8 300 904. Dans l'un et l'autre des deux premiers premiers documents, les dispositifs décrits comprennent essentiellement un corps en matériau élastomère en tant qu'organe de rappel élastique et ne sont pas prévus pour associer au couple de rappel élastique un couple d'amortissement centré sur l'axe de rota tion du levier, de sorte que, lorsqu'une telle fonction est souhaitée pour le système cinématique, un organe annexe complémentaire doit être prévu à cet effet. Dans le troisième document, l'effet d'amortissement est engendré par des forces résultant du mouvement d'ailettes ou de disques dans un fluide, ce qui entraîne une structure complexe des dispositifs correspondants.

Le problème se pose par conséquent de fournir un tendeur rotatif perfectionné qui permette, à l'aide d'un dispositif unitaire, d'obtenir les fonctions précédemment réalisées à l'aide de deux dispositifs distincts et/ou de façon beaucoup plus simple que ce qui était proposé.

Le dispositif de tendeur rotatif pour courroie de transmission de puissance selon l'invention comprenant un levier portant un galet tendeur coopérant avec la courroie et un ressort multispires exerçant un couple de rappel élastique, ainsi que des moyens d'amortissement hydraulique est caractérisé en ce que lesdits moyens comportent au moins un organe souple de forme générale toroïdale rempli de fluide, séparé en deux chambres de volume variable par un organe presseur à une des extrémités desdites chambres et par un clapet à fonctionnement dissymétrique à l'autre extrémité desdites chambres, l'organe presseur étant lié angulairement au levier qui supporte le galet tendeur par un bras sur lequel est accroché le ressort.

Selon une autre caractéristique de l'invention, l'organe presseur est un galet dont le bras porteur est solidaire d'un arbre sur lequel est fixé le levier portant le galet tendeur, ledit arbre étant avantageusement coaxial à l'axe de l'organe souple de forme générale toroïdale, rempli de fluide.

Le ressort de rappel est avantageusement un ressort hélicoïdal placé autour de l'arbre et à l'intérieur de l'espace délimité par l'organe souple de forme générale toroïdale.

Ce dernier est de préférence monté sans possibilité de rotation dans un logement cylindrique et est à paroi suffisamment rigide pour supporter la pression interne du fluide qu'il contient et simultanément suffisamment souple pour permettre son écrasement par le galet presseur, ladite paroi étant en un materiau élastomère, ou un matériau composite, armé ou non armé de fibres textiles, synthétiques ou analogues.

L'invention sera bien comprise par la description qui suit, faite à titre d'exemple et en référence au dessin annexé dans lequel :

- la figure 1 est une vue très schématique d'un système cinématique à courroie de transmission de puissance ;

- la figure 2 est une vue en coupe, à plus grande échelle, suivant la ligne 2-2 de la figure 1, d'un dispositif selon l'invention ;

- la figure 3 est une vue schématique de face, avec arrachement partiel, d'un dispositif selon l'inventio

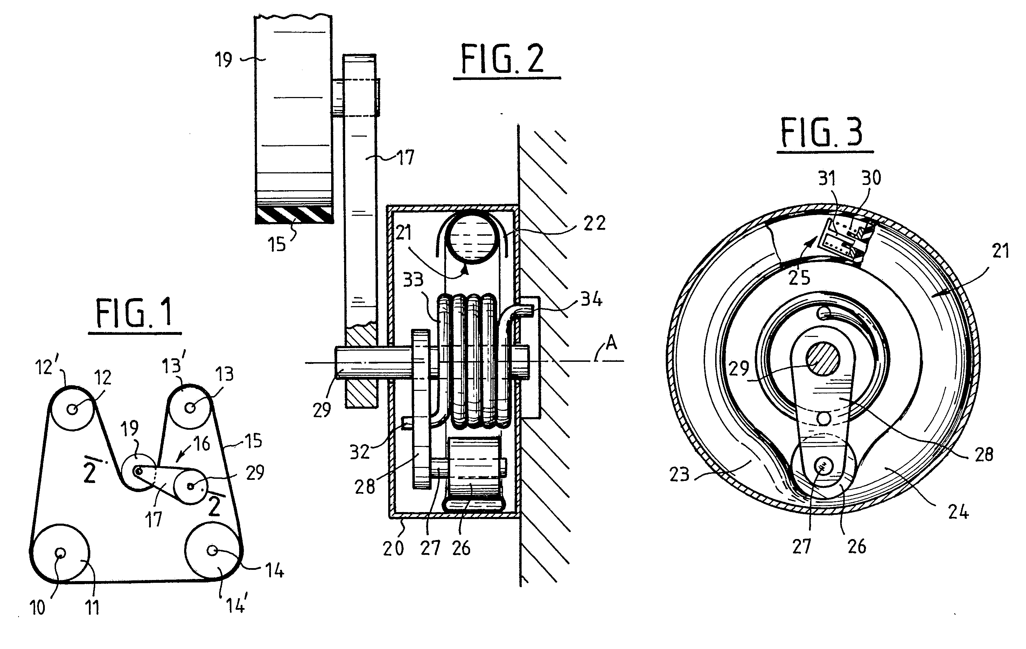

Un système cinématique à courroie de transmission de puissance est montré schématiquement sur la figure 1. Il comprend, par exemple, un arbre menant 10 auquel est associé une poulie 11 et des arbres menés 12, 13 et 14 auxquels sont associées des poulies respectives 12', 13' et 14' entraînées par une courroie de transmission de puissance 15. Pour tenir compte des variations de longueur dues aux tolérances de fabrication de la courroie 15, des variations de tension d'origine thermique et/ou mécanique, de la variation de tension d'origine thermique et/ou mécanique, de la variation de tension due à l'usure de la courroie, etc... le système cinématique comprend en outre un tendeur rotatif 16 dont le levier 17 monté à rotation autour d'un axe porte un galet tendeur 19 coopérant avec la courroie 15.

Le tendeur rotatif 16 enfermé dans un boîtier 20 comprend essentiellement un organe souple 21 de forme générale toroïdale, rempli de fluide et monté dans un logement cylindrique 22, - par rapport auquel il ne peut tourner -, et dont l'axe A est l'axe de rotation du dispositif.

L'organe souple 21 est divisé en deux chambres de volume variable 23 et 24, respectivement, séparées l'une de l'autre à une de leurs extrémités par un dispositif de clapet 25, figure 3, et à leurs autres extrémités par l'obstacle à la circulation du fluide contenu dans ledit organe qui résulte de l'écrasement de celui-ci par un galet 26 contre la paroi du logement 22. Le galet 26 est monté à rotation autour d'un axe 27 porté à l'extrémité d'un bras 28 solidaire en rotation d'un arbre 29, coaxial à l'axe A et qui porte aussi, à l'extérieur du boîtier 20, le levier 17 sur lequel est monté le galet tendeur 19. Par ce montage qui relie mécaniquement le bras 28 et le galet 26 au levier 17 et au galet tendeur 19, les variations de tension de la courroie 15 qui coopère avec ledit galet 19 sont transmises à la fois a l'axe 29, dont les oscillations en rotation traduisent celles des oscillations en tension de la courroie, et au galet presseur 26. Ce dernier en roulant sur l'organe souple de forme générale toroïdale 21 force le fluide contenu dans ledit organe à circuler au travers du clapet 25, lequel est prévu pour faire communiquer les chambres 23 et 24 de façon dissymétrique, toutefois, c'est-a-dire plus facilement de la chambre 24 à la chambre 23, que vice et versa, et cela grâce à un orifice calibré permettant un faible écoulement de fluide même dans la condition de fermeture du clapet, c'est-à-dire lorsque celui-ci est appliqué sur son siège par un ressort 30 entourant sa tige 31.

Sur le bras 28 qui porte l'axe 27 du galet presseur 26 est accrochée l'extrémité 32 d'un ressort héli coïdal de rappel 33 dont l'autre extrémité 34 est fixée au boîtier 20. La disposition du ressort 33 dans l'espace interne à l'organe souple toroïdal 21 conduit à une structure compacte, peu encombrante, et ainsi d'un intérêt particulier dans les systèmes cinématiques de blocs moteurs de véhicules automobiles où l'espace est fréquemment mesuré.

Le fonctionnement du dispositif selon l'invention résulte immédiatement de ce qui précède. Lorsque, à partir d'une condition d'équilibre, il apparaît une augmentation de tension dans la courroie 15 celle-ci commande par le galet tendeur 19 une rotation du levier 17 dans le sens des aiguilles d'une montre, figure 1, qui entraîne à son tour une rotation du bras 28 dans le même sens. Le galet presseur 26, qui roule sur l'organe souple 21, force le fluide contenu dans ledit organe à circuler de la chambre 23 à la chambre 24 au travers du clapet 25 qui est alors dans sa condition de fermeture de sorte que le passage du fluide au travers de l'orifice calibré dudit clapet introduit un effet d'amortissement hydraulique ou "visqueux" élevé, simultanément à la mise sous tension du ressort de rappel hélicoïdal multispires 33.

Lorsque, par contre, c'est une diminution de tension qui apparaît dans la courroie 15, à partir d'une condition d'équilibre, ce pivotement du levier 17 provoque la rotation du bras 28, dans le même sens de rotation, de sorte que le fluide contenu dans l'organe 21 est expulsé de la chambre 24 vers la chambre 23, provoquant l'ouverture du clapet 25 qui est alors sollicité dans le sens passant, introduisant par conséquent un amortissement hydraulique ou "visqueux" de faible valeur.

On obtient ainsi, selon l'invention, un dispositif assurant l'ensemble des fonctions requises de manière simple et sûre, sans avoir recours à des organes d'étanchéité dynamiques du circuit de fluide hydraulique, comme des joints glissants ou tournants.

En outre, le dispositif dont le fonctionnement n'est pas dépendant d'une orientation particulière, peut être mis en place sur le système cinématique qu'il équipe en n'importe quelle position, ce qui constitue un avantage important, en particulier dans le domaine de l'industrie automobile.

A cet avantage s'ajoute celui de pouvoir fonctionner avec une course relativement importante, également comme requis dans le domaine de l'industrie automobile, notamment pour compenser d'éventuelles variations de longueur des courroies utilisées.

L'invention n'est pas limitée à la forme de réalisation décrite et représentee, en particulier en ce qui concerne l'organe souple de forme générale toroïdale enfermant le fluide d'amortissement visqueux. Alors que ledit organe, qui comprend une paroi à la fois suffisamment rigide pour supporter la pression interne du fluide et suffisamment souple pour permettre son écrasement par le galet presseur 26, a été représenté sous forme d'un tuyau ou boudin quelque peu analogue à une chambre à air de pneumatique, il peut être réalise en tant qu'élément plus complexe, par exemple sous forme d'un tuyau lové sur lui-même en plusieurs tours.

En variante, et en fonction des conditions de débit de fluide necessaire, l'organe souple peut également être constitué par la juxtaposition de plusieurs corps de forme générale toroïdale, disposés en parallèle, et associés entre eux pour débiter sur un même clapet à orifice calibré procurant l'amortissement dissymétrique souhaité.

Quel que soit le mode de réalisation l'organe unique, ou pultiple, renfermant le fluide est de préférence realisé en un matériau élastomère, ou un matériau composite, avantageusement, mais non nécessairement, muni d'une armature en fibres textiles synthétiques ou analogues.

**Revendications**

1.- Dispositif de tendeur rotatif pour courroie de transmission de puissance comprenant un levier portant un galet tendeur coopérant avec la courroie et un ressort multispires (33) exerçant un couple de rappel élastique, ainsi que des moyens d'amortissement hydrauliques, caractérisé en ce que lesdits moyens comportent au moins un organe souple de forme générale toroïdale (21) rempli de fluide, séparé en deux chambres (23, 24) de volume variable par un organe presseur (26) à une des extrémités desdites chambres et par un clapet à fonctionnement dissymétrique (25) à l'autre extrémité desdites chambres, l'organe presseur (26) étant lié angulairement au levier (17) qui supporte le galet tendeur (19) par un bras (28) sur lequel est accroché le ressort (33).

2.- Dispositif selon la revendication 1, caractérisé en ce que l'organe presseur est un galet (26) dont le bras proteur (28) est solidaire d'un arbre (29) sur lequel est fixé le levier (17) portant le galet tendeur (19), ledit arbre (29) étant avantageusement coaxial à l'axe (A) de l'organe souple de forme générale toroïdale, rempli de fluide (21).

3.- Dispositif selon la revendication 2, caractérisé en ce que le ressort de rappel est un ressort hélicoïdal (33) avantageusement placé autour de l'arbre (29) et à l'intérieur de l'espace délimité par l'organe souple (21) de forme générale toroïdale.

4.- Dispositif selon l'une quelconque des revendications précédentes, caractérisé en ce que l'organe souple de forme générale toroïdale (21) est monté sans possibilité de rotation dans un logement cylindrique (22).

5.- Dispositif selon l'une quelconque des revendications précédentes, caractérisé en ce que l'organe souple de forme générale toroïdale (21) est à paroi suffisamment rigide pour supporter la pression interne du fluide qu'il contient et simultanément suffisamment souple pour permettre son écrasement par le galet presseur (26).

6.- Dispositif selon la revendication 5, caractérisé en ce que ladite paroi est en un matériau élastomère, ou un matériau composite, armé ou non armé de fibres textiles, synthétiques ou analogues.

FIG. 1

FIG. 2

FIG. 3

0300858

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | WO-A-8 300 904 (DAYCO) <br> * Pages 21-23,44-45; figures 7,23-31 * <br> --- | 1,3 | F 16 H 7/12 <br> F 16 F 9/10 |
| A | FR-A-1 103 491 (WROBEL) <br> * Pages 1-3; figure 4 * <br> --- | 1-5 | |
| A | US-A-3 561 570 (SUNDERMANN) <br> * en entier * <br> --- | 1,2,4 | |
| A | EP-A-0 072 134 (EATON) <br> * En entier * <br> --- | 1,3 | |
| D,A | EP-A-0 013 704 (BOGE) <br> * En entier * <br> ----- | 1 | |

**DOMAINES TECHNIQUES RECHERCHES (Int. Cl.4)**

F 16 H 7/00
F 16 H 9/00

**Le présent rapport a été établi pour toutes les revendications**

| Lieu de la recherche | Date d'achèvement de la recherche | Examinateur |
|---|---|---|
| LA HAYE | 24-10-1988 | FLORES E. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P0402)